# EUROPEAN PATENT SPECIFICATION

(11) **EP 2 406 136 B1**
(45) Date of publication and mention of the grant of the patent: **06.06.2018**
(21) Application number: 10751081.0
(22) Date of filing: 11.02.2010
(51) Int. Cl.: B65B 3/02, B65B 3/04, B65B 31/02, B65B 55/08, B65B 55/10, B65B 61/14, B65D 75/56, F24F 3/16, B65D 75/58

(54) **METHOD FOR PROVIDING A HYGIENIC ENVIRONMENT IN A FILLING MACHINE**
VERFAHREN ZUR BEREITSTELLUNG EINER HYGIENISCHEN UMGEBUNG IN EINER FÜLLMASCHINE
PROCÉDÉ POUR ASSURER UN ENVIRONNEMENT HYGIÉNIQUE DANS UNE MACHINE À REMPLIR

(30) Priority: 09.03.2009 SE 0900294
(43) Date of publication of application: 18.01.2012
(73) Proprietor: Ecolean AB, 251 08 Helsingborg (SE)
(72) Inventor: MELLBIN, Paul, SE-252 85 Helsingborg (SE)
(74) Representative: Awapatent AB
(86) International application number: PCT/SE2010/050163
(87) International publication number: WO 2010/104445

(56) References cited:
- EP-A1- 0 903 294
- EP-B1- 0 503 726
- SE-B- 461 032
- SE-C- 99 467
- US-A- 6 105 634
- US-A- 6 105 634
- RAJAN JAISINGHANI: "ENERGY EFFICIENT LOW OPERATING COST CLEANROOM AIRFLOW DESIGN", IEST'S ESTECH 2003 CONFERENCE, 21 May 2003 (2003-05-21), pages 1-11, XP055189153, Phoenix Arizona

## Description

### Technical Field

The present invention relates to a method for providing a hygienic environment in the filling machine.

### Background Art

A filling machine for filling liquid products, especially liquid foods such as water, milk, juice or wine, in packages is known for example from WO99/41149. The document discloses how a web of packages is conveyed through the filling machine and arrives, in turn, at a station for removing an end seal and thus for opening a filling duct of each container, at a station for filling each container and at a sealing station for closing the filled packages.

During the actual filling process, a nozzle is inserted in the filling duct, whereupon a product valve is opened to enable the desired amount of product to be transferred to the package chamber via said nozzle. A prior art filling machine for filling packages with liquid foodstuffs in a clean room is disclosed in US6105634. It teaches the supply of dehumidified dried air with a low level of germs to the filler pipes to prevent condensation to form on the pipes by creating a certain overpressure in the clean room, which is largely sealed off but not in any way hermetically sealed from the outside air.

A problem associated with filling is the occurrence of spillage. Spillage can occur in a number of ways. For example, liquid may seep out between the nozzle and the filling duct during the filling operation. It may also occur that the filling of a package fails, as a consequence of which the amount of liquid that was intended for the package flows into the filling machine.

However, the most frequent type of spillage is certainly spillage caused by product residue that stick to the nozzle as the latter is being retracted from the package after filling. The product residue may then form drops which detach from the nozzle, only to end up in the filling chamber.

The spillage that remains in the filling machine creates an environment that stimulates the growth of microorganisms. In order to minimize the risk of contamination as a result of said growth of microorganisms, regular shutdowns of the machine are therefore required so as to enable cleaning of the machine.

Various efforts have been made to minimize the growth of microorganisms in an attempt to extend the time between the shutdowns for cleaning of the filling machine.

One approach has been to completely eliminate the occurrence of spillage, but this has turned out to be a difficult task. Above all, it has proved difficult to eliminate spillage that is due to product residue sticking to the nozzle and forming drops which detach from the nozzle as the latter is being retracted from the package after filling.

Attempts have also been made to eliminate the occurrence of microorganisms through extensive sterilization of the filling machine, packages and products. However, packaging systems of this kind are generally relatively complex and therefore expensive. Moreover, it is practically impossible to completely eliminate all microorganisms, which is why regular shutdowns for cleaning of the filling machine are required also for filling machines of this kind.

Another approach has been to kill the microorganisms. To this end, chemicals, for example, have been introduced in the filling machine, which is not advisable in particular in the case where the filling machine is intended for food products, since chemicals capable of killing microorganisms are often harmful to humans. Furthermore, UV lamps have been arranged in the filling machine for the purpose of killing microorganisms by exposing them to UV light. However, because complete exposure often is not possible due to shadowing, the effect of UV light is insufficient. Moreover, UV light cannot penetrate through, for example, a drop of milk or a dollop of chocolate pudding to kill microorganisms.

There is thus a need to provide a hygienic environment which inhibits the growth of microorganisms in the filling machine. There is also a need to maintain a sterile environment in an already sterile filling machine.

### Summary of the Invention

In view of the above, it is an object of the present invention to provide a hygienic environment in a filling chamber of a filling machine.

To achieve the above object and further non-stated objects, which will appear from the following description, the present invention concerns a method according to claim 1. Embodiments of the method are evident from claims 2-8. The invention relates to a method for providing a hygienic environment in a filling chamber of a filling machine, in which filling chamber packages are filled by transferring liquid contents to the packages by means of a filling nozzle. The method comprises dehumidifying air for providing dried air, producing an air flow through said filling chamber by means of a continuous supply of said dried air to the filling chamber and allowing air to escape from the filling chamber via a package inlet, through which the unfilled packages enter the filling chamber and/or via a package outlet, through which the filled packages leave the filling chamber. The dried air is supplied in such an amount that an excess pressure is created in the filling chamber and that the air in the filling chamber is replaced 100-200 times per hour, whereby the air flow produced by the dried air takes up water from spillage present in the filling chamber, thus providing said hygienic environment which inhibits the growth of microorganisms.

A method is thus provided which enables the filling of containers in a hygienic environment. By dehumidifying the air for providing dried air and continuously supplying the dried air to the filling chamber an air flow through the filling chamber is produced, which air flow takes up any moisture that may be present and, in doing so, effectively creates a dry environment in the filling chamber. The dry environment inhibits the growth of microorganisms. By allowing air to escape from the filling chamber via a package inlet, through which the unfilled packages enter the filling chamber and/or via a package outlet, through which the filled packages leave the filling chamber, a dry environment is obtained in the whole filling chamber since dried air will flow through the whole filling chamber.

The step of dehumidifying can be effected by cool drying, where the air is cooled to condense off water.

The dried air can be supplied to the filling chamber at such a flow rate that the air in the filling chamber can be replaced 100-200 times per hour and more preferably 125-175 times per hour. It is important to ensure that the amount of air that is supplied to the filling chamber is sufficient to produce, at all times, a dry environment in the filling chamber. In the case of a filling chamber with a volume of 4 m³, the dried air can be supplied, for example, at a flow rate of 600 m³/h.

The dried air can be supplied in such an amount that the air flow thus produced is capable of absorbing 0.25-10 kg of water per hour and more preferably 1-2 kg of water per hour.

At atmospheric pressure the dried air can have a relative humidity in the range 0-30% and more preferably 10-20% when supplied to the filling chamber.

The dried air can be tempered to maintain a temperature in the range 15-35°C when supplied to the filling chamber. By tempering the air to a suitable temperature the amount of water that the air can absorb is regulated. Cold air can absorb less water than warm air. The step of tempering the air thus involves treating the air to adjust or regulate its temperature.

The method can further comprise the step of sterilizing the air that is being dehumidified, wherein the step of sterilizing the air can occur before, during or after the step of dehumidifying the air. Because the air flow supplied to the filling chamber is sterile the amount of microorganisms in the filling chamber is reduced, which makes it easier to maintain a hygienic environment.

The air can be sterilized by filtering.

The method can also comprise supplying the packages in the form of blanks and filling them by inserting said filling nozzle in a filling duct of each package. Any spillage that may occur as the filling nozzle is moved into and out of the filling ducts of the packages can be effectively taken care of by the flow of dried air that is supplied to the filling chamber. A non-claimed filling machine for filling packages is also disclosed here below. The filling machine comprises a filling chamber, in which the packages are filled by transferring liquid contents to the packages by means of a filling nozzle, a package inlet, through which the unfilled packages enter the filling chamber, a package outlet, through which the filled packages leave the filling chamber, a dehumidifier, which is arranged to dehumidify air for providing dried air, and an air supply unit, which is arranged to produce an air flow through the filling chamber by means of a continuous supply of said dried air via an air intake. The air supply unit is arranged to supply the dried air in such an amount that an excess pressure is created in the filling chamber and that the air in the filling chamber is replaced 25-250 times per hour, the air supplied to the filling chamber being adapted to escape from the filling chamber via the package inlet and/or via the package outlet, whereby the air flow created by the dried air takes up water present in the filling chamber, thus providing a hygienic environment which inhibits the growth of microorganisms.

Said dehumidifier can comprise a cool-drying means for drying air by condensing off water.

The filling machine can further comprise a sterilizing unit for sterilizing the air that is supplied to the filling chamber. The sterilizing unit can ensure that the air flow supplied to the filling chamber is sterile. In this way, the amount of microorganisms in the filling chamber is reduced, which makes it easier to maintain a hygienic environment.

Said sterilizing unit can comprise a sterilizing filter.

The filling machine can further comprise a tempering unit for tempering the air that is supplied to the filling chamber. The tempering unit can ensure that the air that is supplied to the filling chamber has the appropriate temperature. In this way, the amount of water that the air is a capable of absorbing can be regulated. Cold air can absorb less water than warm air.

The tempering unit can be adapted to temper the air that is supplied to the filling chamber to a temperature in the range 15-35°C.

Said air intake can be centrally positioned in the filling chamber. As a result of this central positioning the drying effect can be maximized.

### Brief Description of the Drawings

Embodiments of the present invention will be described below by way of example and with reference to the accompanying drawings.
Figure 1 is a schematic view of a first embodiment of a filling machine according to the present invention.
Figure 2 is a schematic view of a second embodiment of a filling machine according to the present invention.
Figure 3 is a perspective view of a package of the collapsible type.

### Description of Embodiments

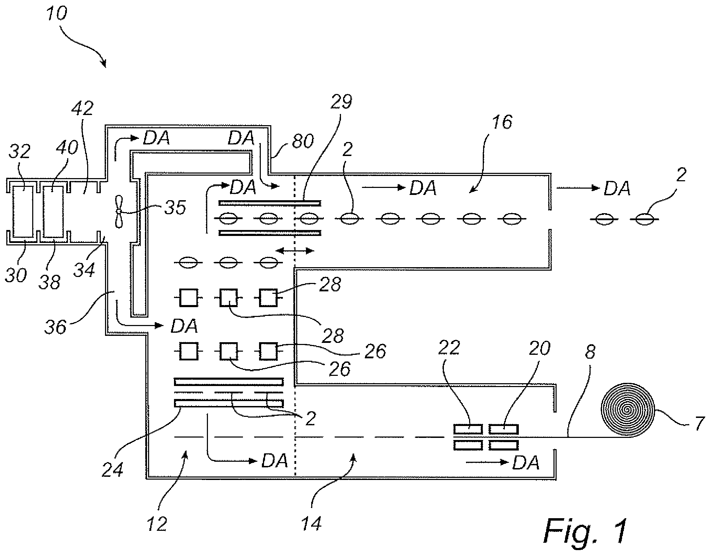

Reference is now made to Figure 1, which illustrates an embodiment of a filling machine 10 for filling packages 2 according to the invention.

The filling machine 10 comprises a filling chamber 12, a package inlet 14 and a package outlet 16. Packages 2 that are to be filled in the filling machine 10 are supplied via the package inlet 14. The filled packages 2 are discharged via the package outlet 16.

The filling machine 10 further comprises a feeding means (not shown), which is adapted to feed the packages 2 to the filling chamber 12 via the package inlet 14. According to the shown embodiment, the filling machine is thus adapted to handle packages which are supplied in the form of blanks. It will be appreciated, however, that the present invention also covers methods and devices according to which the packages are formed in the filling machine itself.

More specifically, the feeding means is adapted to receive packages 2 which are supplied in the form of a web 8 rolled onto a bobbin. The direction of orientation of the packages 2 coincides with the longitudinal direction of the rolled-out web 8. The feeding means is adapted to transport the packages 2 in a direction parallel to said direction of orientation. During this transport opening and separation of the packages 2 is effected.

Accordingly, the filling machine 10 comprises an opening station 20, in which the packages 2 are opened to enable the packages 2 to be filled with contents and a separating station 22, in which the interconnected packages 2 are separated. The opening station 20 can comprise a first cutting tool, which is arranged, during feeding of the packages 2 in their interconnected state in which they form an elongate web of packages 2, to open a filling duct 6 of each package 2 by cutting off a strip at the top. The separating station 22 can comprise a second cutting tool, which separates the interconnected packages 2 from each other.

The filling machine 10 further comprises a transport means, schematically illustrated at 24, which is adapted to transport said packages 2, while maintaining their direction of orientation, inside the filling chamber 12 in a transverse direction relative to said direction of orientation. As shown in the illustrated embodiment, the transport means 24 can be arranged for stepwise transport of the packages 2.

The transport means 24 can further be arranged, during said transport, to move the packages 2 in said transverse direction along a curved path.

The filling machine further comprises a filling station 26 for filling packages 2 and a sealing station 28 for sealing the filled packages 2, and the transport means 24 is adapted to move the packages 2 to these stations 26, 28.

In the filling station 26, packages are filled by transferring liquid contents to the packages by means of a filling nozzle.

By virtue of the fact that the transport means 24 is arranged for stepwise transport of the packages 2, with maintained direction of orientation, in said transverse direction, the packages 2 can be moved in a stepwise manner to the filling station 26 for filling the packages 2 via the opened filling ducts 6 of the packages 2. Moreover, the filled packages 2 can be moved, in a stepwise manner, to the sealing station 28 for sealing the filling channels 6 of the filled packages 2.

The transport means 24 can also be arranged for further stepwise transport of the packages 2 to a subsequent gas filling station (not shown) for filling a handle portion of each package with gas and then to a gas sealing station arranged thereafter (not shown) at which the gas-filled handle portions are sealed.

The filled packages 2 are discharged via the package outlet 16 by means of a discharging means 29. The discharging means 29 is adapted to transport the packages 2 in a direction parallel to said direction of orientation while maintaining the direction of orientation of the packages 2. In the embodiment shown, the feeding direction and the discharging direction are opposite to one another, but it will be appreciated that these directions can also have the same orientation.

The filling machine 10 further comprises a dehumidifier 30, which is adapted to dehumidify air for providing dried air DA. By dried air is here meant air which at atmospheric pressure has a relative humidity in the range 0-30% and more preferably 10-20%. The dehumidifier 30 comprises a cool drying means 32 in which air is cooled to condense off water for providing said dried air DA. Alternatively, the dehumidifier 30 can comprise a moisture absorber for taking up water from the passing air.

The filling machine 10 further comprises an air supply unit 34, which is adapted to produce an air flow through the filling chamber 12. The air flow is achieved by means of a continuous supply of the dried air DA to the filling chamber 10 via an air intake 36. The air supply unit 34 is adapted to supply the dried air DA in such an amount that an excess pressure is created in the filling chamber 12, i.e. the inflow of air is allowed to slightly exceed the outflow of air. To achieve the maximum effect the air intake 36 is centrally positioned on the filling chamber 12.

As in the shown embodiment, the air supply unit 34 can comprise a fan means 35, which blows the dried air DA into the filling chamber 12 via said air intake 36 to produce said air flow through the filling chamber 12. In a typical embodiment, the air supply unit 34 is adapted to produce such an air flow that the air in the filling chamber 12 is replaced 100-200 times per hour, more preferably 125-175 times per hour.

The air flow through the filling chamber 12 that is produced by the supplied dried air DA escapes from the filling machine 10 via the package inlet 14 and via the package outlet 16. The air flow can also escape from the filling machine 10 via other air evacuation means (not shown).

The dried air DA that is supplied to the filling chamber 12 produces an air flow which is capable of taking up water present in the filling chamber 12. Since dried air DA is supplied continuously and since there is an excess pressure inside the filling chamber 12, the air which has taken up water will flow out of the filling chamber 12. In this way, a dry or at least drier environment is obtained inside the filling chamber 12. A drier environment means a hygienic environment, since the growth of microorganisms is inhibited in a dry or drier environment.

The flow of air into the package outlet 16 should be such as to ensure that air will not flow into the filling chamber 12 when the discharging means 29 is moving between the package outlet 16 and the filling chamber 12 or vice versa. Problems may occur in particular when the discharging means 29 is moving between the filling chamber 12 and the package outlet 16. If the discharging means 29 moves at a higher speed than the outflow velocity of the air flow, dirty air may be sucked into the filling chamber 12.

Additional air supply means 80 can be arranged at the package outlet 16. This ensures that there is always an excess pressure on that side of the package outlet 16 where the filling chamber is located.

According to the shown embodiment, the filling machine 10 further comprises a sterilizing unit 38, which is adapted to sterilize said dried air DA. In the shown embodiment, the sterilizing unit 38 is located downstream of the dehumidifier 30. The sterilizing unit 38 can comprise a sterilizing filter 40 for sterilizing the air. Alternatively, the air can be sterilized by heating it to 300-400°C. By virtue of the fact that the air flow that is supplied to the filling chamber 12 is sterile too, the amount of microorganisms in the filling chamber 12 is reduced, which makes it easier to maintain a hygienic environment.

A test was carried out in which 600 m³/h of dried air was supplied to a filling chamber with a volume of 4 m³, which means that the air was replaced 150 times per hour. The air had a temperature of 27°C and was dried in a cool dryer to obtain a relative humidity of the air in the range 10-20% when supplied to the filling chamber. By virtue of the flow of dried air through the filling chamber it was possible to remove 2 kg of water per hour from the filling chamber.

As in the shown embodiment, the filling chamber 10 can comprise a tempering unit 42. The tempering unit 42 is arranged downstream of the sterilizing unit 38. This means that the tempering unit 42 is also arranged downstream of the dehumidifier 30. The tempering unit 42 is adapted to temper the dried air DA to a suitable temperature. By tempering is here meant a process for adjusting the temperature. In a typical embodiment, the temperature of the tempered dried air DA is in the range 15-35°C. By tempering the air to a suitable temperature the amount of water that the air can absorb is regulated. Cold air can absorb less water than warm air. It is also possible to choose not to actively temper the air, but to let the operating temperature of the filling machine temper the air. The operating temperature of the filling machine can be 25-30°C and is the result of the heat generated by sealing jaws, mechanical friction and the like.

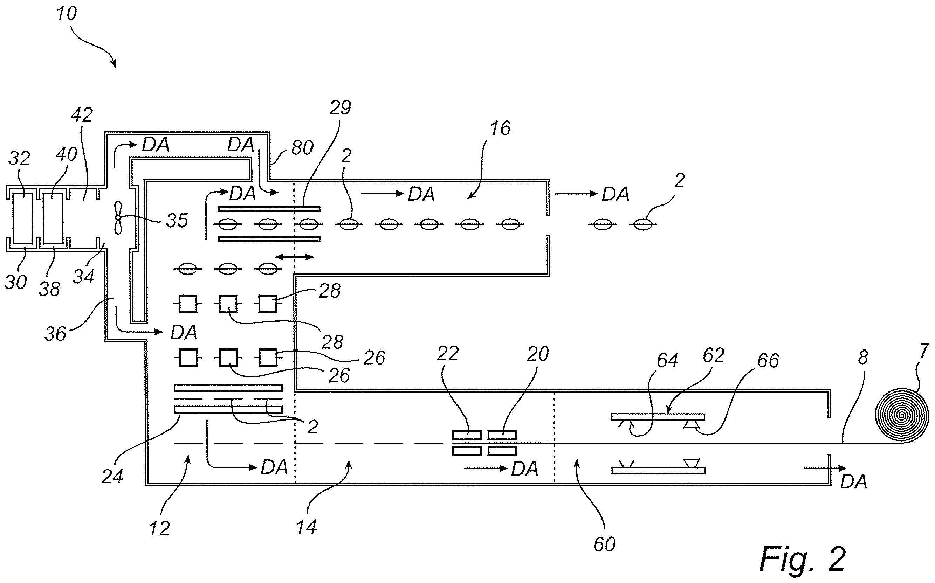

An alternative embodiment of the invention is shown in Fig. 2. According to this embodiment, the filling machine 10 comprises a sterilizing lock chamber 60. Said sterilizing lock chamber 60 is connected to the filling chamber 12 at the package inlet 14 of the filling chamber 12. The sterilizing lock chamber 60 comprises sterilizing equipment 62 for external sterilization of the packages 2. The sterilizing equipment 62 can comprise nozzles 64 for spraying a sterilizing agent onto the outsides of the packages 2. Examples of sterilizing agents are hydrogen peroxide or ozone. Alternatively, the sterilizing equipment 62 can comprise lamps 66 which are adapted to expose the outsides of the packages 10 to UV light. Furthermore, the sterilizing equipment 62 for external sterilizing of the packages 2 provided in said sterilizing lock chamber 60 can comprise lamps 66 for exposing the outsides of the packages to UV light as well as nozzles 64 for spraying a sterilizing agent onto the outsides of the packages 2. By virtue of the fact that the packages that are fed into the filling chamber 12 are sterile the amount of microorganisms in the filling chamber 12 is reduced, which makes it easier to maintain a hygienic environment.

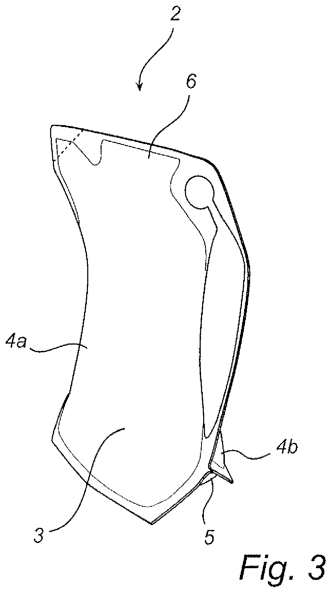

Examples of packages 2 that can be filled in the filling machine 10 are packages 2 having a compartment 3 which is defined by flexible walls, which walls comprise two opposing side walls 4a, 4b and a bottom wall 5 which is folded to a double-wall shape. A package of the above type is shown in Fig. 3. The side walls 4a, 4b of the package 2 together define a filling duct 6, which is closed and preferably sterilized in the illustrated non-filled state of the package. By opening the filling duct 6, the compartment 3 of the package 2 is placed in communication with the surroundings, which enables filling of the package 2. The filling duct 6 is adapted to be reclosed after filling, for example by heat-sealing.

This type of packages 2 is preferably produced from a flexible, laminated packaging material. The packaging material can comprise a core layer of a polyolefin material. The core layer can further comprise a filler mineral material, which can advantageously be constituted by chalk (calcium carbonate).

The packages 2 of the above-stated type are distributed to the filling machine 10 rolled up on a bobbin for forming a roll 7 with a web 8 of interconnected empty packages 2.

It will be appreciated that the air that is being dehumidified in the dehumidifier 30 can be sterilized, in the sterilizing unit 38, before, during or after the step of dehumidifying the air. Hence, the sterilizing unit 38 can be located upstream or downstream of the dehumidifier 30. Alternatively, the sterilizing unit 38 and the dehumidifier 30 can be integrated into a single unit.

It will also be appreciated that, where appropriate, the air that is being dehumidified in the dehumidifier 30 can be tempered, in the tempering unit 42, before, during or after the step of dehumidifying the air. Hence, the tempering unit 42 can be located upstream or downstream of the dehumidifier 30. Alternatively, the tempering unit 42 and the dehumidifier 30 can be integrated into a single unit.

It will be appreciated that the present invention is not limited to the embodiment shown. Several variations and modifications are thus conceivable and therefore the scope of the present invention is defined solely by the appended claims.

## Claims

1. A method for providing a hygienic environment in a filling chamber (12) of a filling machine (10), in which filling chamber (12) packages (2) are filled by transferring liquid contents to the packages (2) by means of a filling nozzle (27), which method comprises
dehumidifying air for providing dried air, and
producing an air flow through said filling chamber by means of a continuous supply of said dried air to the filling chamber (12),
allowing air to escape from the filling chamber (12) via a package inlet (14), through which the unfilled packages (2) enter the filling chamber (12) and/or via a package outlet (16), through which the filled packages (2) leave the filling chamber (12),
the dried air being supplied in such an amount that an excess pressure is created in the filling chamber (12) and that the air in the filling chamber (12) is replaced 100-200 times per hour, more preferably 125-175 times per hour, and
to use the air flow produced by the dried air for taking up water from spillage present in the filling chamber (12), for providing a dry environment that forms said hygienic environment which inhibits the growth of microorganisms.

2. A method as claimed in claim 1, wherein the step of dehumidifying the air is effected by cool drying, where the air is cooled to condense off water.

3. A method as claimed in claim 1 or 2, wherein the dried air is supplied in such an amount that the air flow thus produced is capable of absorbing 1-2 kg of water per hour.

4. A method as claimed in any one of claims 1-3, wherein the dried air has a relative humidity in the range 0-30% and more preferably 10-20% when supplied to the filling chamber (12).

5. A method as claimed in any one of claims 1-4, wherein the dried air is tempered to maintain a temperature in the range 15-35°C when supplied to the filling chamber (12).

6. A method as claimed in any one of claims 1-5, further comprising the step of sterilizing the air that is being dehumidified, wherein the step of sterilizing the air may occur before, during or after the step of dehumidifying the air.

7. A method as claimed in claim 6, wherein the air is sterilized by filtering.

8. A method as claimed in any one of the preceding claims, wherein the packages (2) are supplied in the form of blanks and filled by inserting said filling nozzle (27) in a filling duct (6) of each package (2).

## Patentansprüche

1. Verfahren zum Bereitstellen einer hygienischen Umgebung in einer Füllkammer (12) einer Füllmaschine (10), in der die Füllkammer (12)-Pakete (2) durch Übertragen von flüssigem Inhalt in die Pakete (2) mittels einer Fülldüse (27) gefüllt werden, wobei das Verfahren Folgendes umfasst:
Entfeuchten von Luft zum Bereitstellen von getrockneter Luft, und
Erzeugen eines Luftstroms durch die Füllkammer durch kontinuierliche Zufuhr von getrockneter Luft zur Füllkammer (12),
Entweichen lassen von Luft aus der Füllkammer (12) über einen Paketeinlass (14), durch den die ungefüllten Pakete (2) in die Füllkammer (12) eintreten, und/oder über einen Paketauslass (16), durch den die gefüllten Pakete (2) die Füllkammer (12) verlassen,
wobei die getrocknete Luft in einer solchen Menge zugeführt wird, dass ein Überdruck in der Füllkammer (12) erzeugt wird und dass die Luft in der Füllkammer (12) 100-200 mal pro Stunde ersetzt wird, besser 125-175 mal pro Stunde, und
Verwenden des Luftstroms, der durch die getrocknete Luft erzeugt wird, zum Aufnehmen von Wasser aus verschüttetem Material, das in der Füllkammer (12) vorhanden ist, um für eine trockene Umgebung zu sorgen, die die hygienische Umgebung darstellt, die das Wachstum von Mikroorganismen hemmt.

2. Verfahren nach Anspruch 1, wobei der Schritt des Entfeuchtens der Luft durch Kühltrocknung bewirkt wird, wobei die Luft gekühlt wird, um Wasser durch Kondensation abzuscheiden.

3. Verfahren nach Anspruch 1 oder 2, wobei die getrocknete Luft in einer solchen Menge zugeführt wird, dass der Luftstrom, der so erzeugt wurde, in der Lage ist, 1-2 kg Wasser pro Stunde zu absorbieren.

4. Verfahren nach einem der Ansprüche 1-3, wobei die getrocknete Luft eine relative Feuchtigkeit im Bereich 0-30 % hat und besser von 10-20 %, wenn sie der Füllkammer (12) zugeführt wird.

5. Verfahren nach einem der Ansprüche 1-4, wobei die getrocknete Luft temperiert ist, um eine Temperatur im Bereich 15-35 °C aufrechtzuerhalten, wenn sie der Füllkammer (12) zugeführt wird.

6. Verfahren nach einem der Ansprüche 1-5, das ferner den Schritt des Sterilisierens der Luft, die entfeuchtet wird, umfasst, wobei der Schritt des Sterilisierens der Luft vor, während oder nach dem Schritt des Entfeuchtens der Luft auftreten kann.

7. Verfahren nach Anspruch 6, wobei die Luft durch Filtern sterilisiert wird.

8. Verfahren nach einem der vorherigen Ansprüche, wobei die Pakete (2) in Form von Vorformen zugeführt und durch Einführen der Fülldüse (27) in einen Füllkanal (6) jedes Paketes (2) gefüllt werden.

## Revendications

1. Procédé permettant d'assurer un environnement hygiénique dans une chambre de remplissage (12) d'une machine à remplir (10), dans laquelle chambre de remplissage (12) des paquets (2) sont remplis en transférant des contenus liquides dans les paquets (2) au moyen d'une buse de remplissage (27), lequel procédé comprenant
la déshydratation d'air pour fournir de l'air séché, et
la production d'un flux d'air à travers ladite chambre de remplissage au moyen d'un apport continu de dit air séché à la chambre de remplissage (12),
le fait de laisser l'air s'échapper de la chambre de remplissage (12) via une entrée de paquet (14) à travers laquelle les paquets non remplis (2) entrent dans la chambre de remplissage (12) et/ou via une sortie de paquets (16) à travers laquelle les paquets remplis (2) quittent la chambre de remplissage (12),
l'air séché étant en quantité telle qu'une pression excédentaire soit créée dans la chambre de remplissage (12) et que l'air se trouvant dans la chambre de remplissage (12) soit remplacé 100 à 200 fois par heure, plus préférentiellement 125 à 175 fois par heure, et
pour utiliser le flux d'air produit par l'air séché pour récupérer de l'eau issue de déversement présente dans la chambre de remplissage (12), pour créer un environnement sec qui forme ledit environnement hygiénique qui inhibe la croissance de micro-organismes.

2. Procédé selon la revendication 1, dans lequel l'étape de déshydratation de l'air est effectuée par séchage par refroidissement, l'air étant refroidi pour condenser l'eau.

3. Procédé selon la revendication 1 ou 2, dans lequel l'air séché est fourni en une quantité telle que le flux d'air ainsi produit soit capable d'absorber 1 à 2 kg d'eau par heure.

4. Procédé selon l'une quelconque des revendications 1 à 3, dans lequel l'air séché a une hygrométrie relative de l'ordre de 0 à 30 % et plus préférentiellement de 10 à 20 % lorsqu'il est apporté à la chambre de remplissage (12).

5. Procédé selon l'une quelconque des revendications 1 à 4, dans lequel l'air séché est tempérs pour maintenir une température de l'ordre de 15 à 35 °C lorsqu'il est apporté à la chambre de remplissage (12).

6. Procédé selon l'une quelconque des revendications 1 à 5, comprenant en outre l'étape de stérilisation de l'air qui est en cours de déshydratation, l'étape de stérilisation de l'air pouvant se produire avant, pendant ou après l'étape de déshydratation de l'air.

7. Procédé selon la revendication 6, dans lequel l'air est déshydraté par filtration.

8. Procédé selon l'une quelconque des revendications précédentes, dans lequel les paquets (2) sont fournis sous forme d'ébauches et remplis en insérant ladite buse de remplissage (27) dans une conduite de remplissage (6) de chaque paquet (2).
